Europäisches Patentamt

European Patent Office

Office européen des brevets

(11) Numéro de publication : **0 506 612 A1**

# (12) DEMANDE DE BREVET EUROPEEN

(21) Numéro de dépôt : **92810193.0**

(22) Date de dépôt : **18.03.92**

(51) Int. Cl.$^5$ : **B23Q 35/20**

(30) Priorité : **28.03.91 CH 952/91**

(43) Date de publication de la demande :
**30.09.92 Bulletin 92/40**

(84) Etats contractants désignés :
**CH DE FR GB IT LI**

(71) Demandeur : **Tornos-Bechler SA**
**111 rue Industrielle**
**CH-2740 Moutier (CH)**

(72) Inventeur : **Simonin, Jean-Claude**
**Courtine 35**
**CH-2740 Moutier (CH)**

(74) Mandataire : **Rochat, Daniel Jean et al**
**Bovard SA Ingénieurs-Conseils ACP**
**Optingenstrasse 16**
**CH-3000 Bern 25 (CH)**

(54) **Tour comportant au moins une broche, au moins un coulisseau et au moins un mécanisme de transmission.**

(57) Le coulisseau (4) constitué de la table (8) et du socle (11) est actionné dans le sens radial par rapport à la barre de matériau à usiner (M), par l'intermédiaire du plot (17) ajustable dans la fente (16) et dont la position est réglable au moyen d'une vis et d'un moteur. Le galet (24), porté par le plot (17) se déplace alors dans la fente (25) du bras (26) solidaire de l'arbre (7f). Les oscillations de cet arbre sont commandées par la came de pilotage. Le déplacement du plot 17 par rapport au point de pivotement du bras 26 permet de varier le rapport de transmission et par conséquent la course du coulisseau (4). L'angle α entre les directions des fentes (16) et (25) est différent de zéro en fin de course, de sorte que le moteur de commande permet d'ajuster la position finale de l'outil (29).

FIG. 4

La présente invention a pour objet un tour comportant au moins une broche, au moins un coulisseau mobile sur un support en direction de ou parallèlement à l'axe de la broche et au moins un mécanisme de transmission actionné par un organe de commande qui détermine la course du coulisseau. En général, dans les tours de ce genre, l'organe de commande est une came. Celle-ci peut cependant être remplacée par un vérin ou dispositif analogue.

On sait que les dispositifs de commande électroniques ont permis d'améliorer le fonctionnement des tours à came en simplifiant et en accélérant les opérations dites de mise en route, en vue de l'usinage d'une série de pièces d'un type prédéterminé. Ainsi, on connaît des dispositifs nommés verniers électroniques qui permettent d'ajuster automatiquement, et en fonction d'un programme, la position finale de l'outil monté sur un coulisseau. Par conséquent, il est possible de tenir compte du degré de l'usure éventuelle de l'outil et des positions relatives des différents éléments de transmission.

Le but de la présente invention est d'apporter une nouvelle amélioration au fonctionnement des tours du genre mentionné au début, en introduisant, dans le mécanisme de transmission, une commande à moteur qui, non seulement facilite et accélère les opérations de mise en route qui doivent être effectuées en vue de la réalisation d'une série de pièces de type prédéterminé, mais qui permet de plus, le cas échéant, d'effectuer au moyen des mêmes éléments l'ajustage fin de la position finale de l'outil.

Dans ce but, le tour selon l'invention du genre mentionné au début est caractérisé en ce que le mécanisme comprend un élément de transmission dont le rapport de transmission est ajustable et est commandé par un moteur programmable.

On va décrire ci-après, à titre d'exemple, une forme d'exécution de l'objet de l'invention en se référant au dessin annexé dont

la fig. 1 est une vue en perspective schématique et partielle de certains éléments d'un tour multibroches, qui constitue la forme d'exécution préférée de l'objet de l'invention,

la fig. 2 est une vue en élévation, partiellement coupée, vue dans la direction de l'axe de la broche, d'une partie du tour de la fig. 1,

la fig. 3 est une vue en plan de dessus et également partiellement coupée des éléments visibles à la fig. 2 et

la fig. 4 est une vue schématique analogue à la fig. 2, permettant d'expliquer le réglage de la position finale de l'outil.

Bien que le perfectionnement faisant l'objet de la présente invention soit expliqué ci-après sur la base d'un exemple relatif à un tour multi-broches, il est bien entendu que ce perfectionnement pourrait également être introduit dans un tour monobroche.

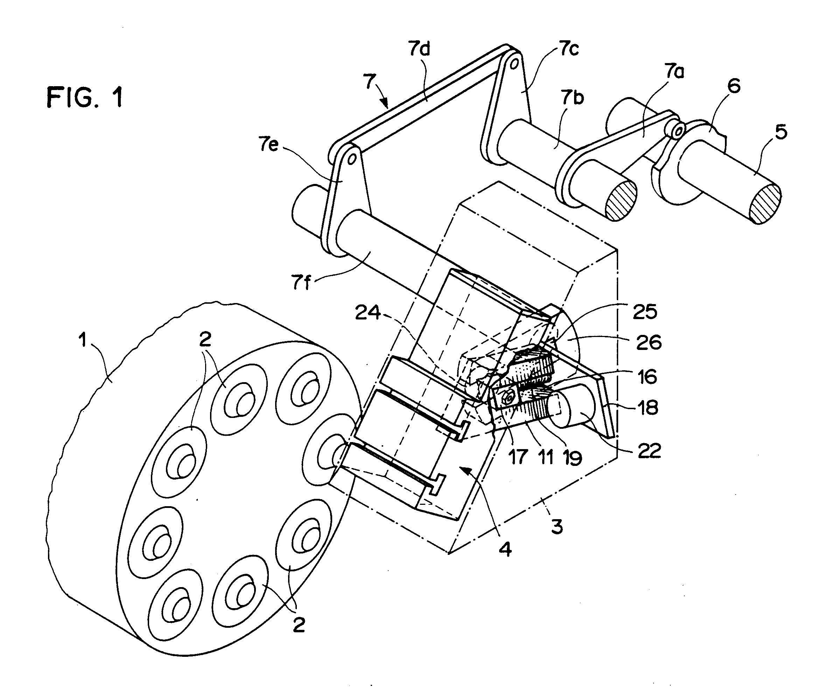

Le tour multi-broches représenté au dessin comporte un barillet 1 qui peut être indexé, selon des moyens connus, par rotation pas à pas autour de son axe longitudinal et qui porte huit broches désignées par 2. Le barillet peut aussi avoir 4, 5 ou 6 broches selon les types de machine. Chacune de ces broches est agencée pour guider une barre ou une ébauche de matériau à usiner et le tour comporte, sur son embase fixe, une série de supports dont l'un désigné par 3 est représenté à la fig. 1, et sur chacun desquels coulisse un coulisseau 4 agencé pour recevoir un porte-outils (non représenté à la fig. 1) portant lui-même un outil de coupe capable de coopérer avec la barre de matériau guidé par une des broches 2.

Avec chaque support 3, coopère un arbre à came 5 qui porte une came 6 agencée pour guider un mécanisme de transmission 7 qui actionne le coulisseau 4. Dans la figure schématique 1, le mécanisme de transmission 7 comporte un levier palpeur 7a, solidaire d'un premier arbre 7b, qui porte lui-même un levier d'embiellage 7c, articulé sur une bielle 7d qui entraîne un levier de coulisseau 7e, solidaire d'un deuxième arbre 7f.

Des mécanismes de ce genre sont connus et l'on sait que, si l'on désire utiliser comme came 6 une came ayant une course standard, il est nécessaire de pouvoir régler en fonction de la pièce à usiner le rapport du mécanisme de transmission 7.

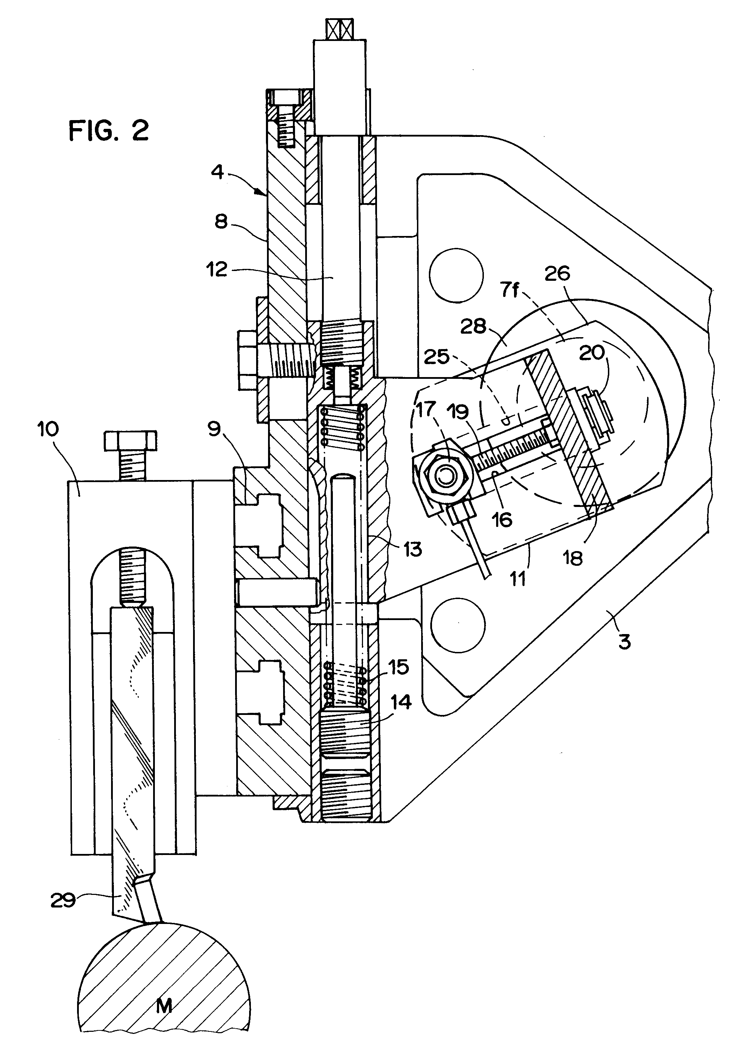

Comme on le verra sur la base des figures 2, 3 et 4 ci-après, le mécanisme 7 représenté schématiquement à la fig. 1 présente un agencement à rapport réglable tel que les données du réglage peuvent être mises en mémoire dans un programme d'exécution de la séquence des opérations.

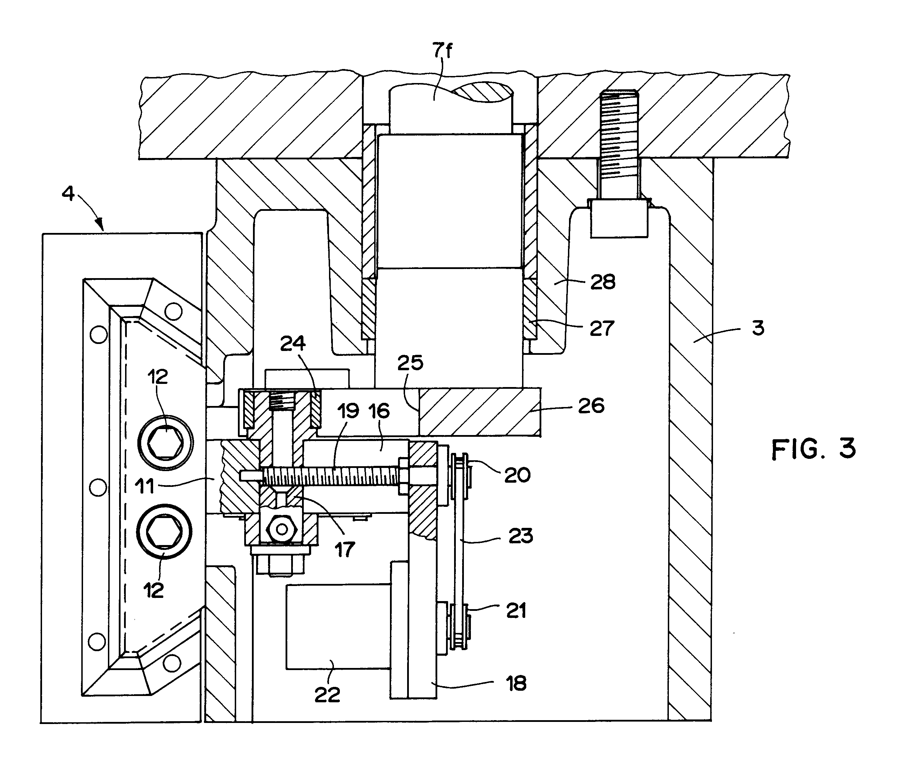

Les fig. 2 et 3 montrent, en élévation et en plan de dessus partiellement coupé, le support 3, le coulisseau 4 et certains éléments du mécanisme 7. Comme on le voit à la fig. 2, le coulisseau 4 est constitué principalement d'une table 8, munie de rainures 9 dans lesquelles peut se fixer le porte-outils 10 et d'un socle 11 sur lequel la table 8 peut être fixée dans une position exactement ajustée. Le socle 11 coopère avec le coulisseau 4. Ce dernier est limité en position avant par la butée 12. Une paire de logements 13 coopèrent avec des tiges 14 fixes par rapport au support, et des ressorts 15 qui tendent à pousser le coulisseau dans sa position écartée de l'axe de la broche.

Le socle 11 s'étend latéralement dans un évidement du support 3. Il présente une fente longitudinale 16, munie de gorges ou de saignées (non représentées) de façon à pouvoir guider en translation un plot 17. A l'extrémité extérieure du socle 11 est fixée une plaquette 18 qui obture la fente 16 et qui présente un trou dans lequel est guidée avec précision une vis à billes 19 dont le pivot d'extrémité est engagé dans un trou borgne ménagé dans le fond de la fente 16. Cette vis à billes porte, à son extrémité extérieure, une poulie 20 qui coopère avec une poulie homologue 21, montée à l'extrémité de l'arbre de sortie d'un moteur pas à pas 22 dont le stator est fixé sur la plaquette 18. Une courroie 23, le cas échéant du type des courroies crantées, permet d'entraîner en rotation la vis à billes 19 à partir du moteur 22, qui est par exemple un moteur pas à pas effectuant deux cents pas par tour, le rapport de transmission entre l'arbre de sortie 21 et la vis 19 étant de 1. Le filetage de la vis 19 est engagé dans un taraudage du plot 17 de sorte que la rotation du moteur 22 a pour effet de déplacer ce plot dans la fente 16.

L'extrémité du plot 17 a la forme d'une portée cylindrique sur laquelle est monté un galet 24. Ce galet (fig. 3) est lui-même engagé dans une fente à flancs parallèles 25, que présente un bras 26 s'étendant radialement, par rapport à l'axe de l'arbre 7f. On voit en effet à la fig. 3 que l'extrémité de l'arbre 7f pivote dans un palier 27, monté dans un manchon 28 solidaire du support 3 et que le bras 26 présente la forme d'une plaque allongée fixée radialement à l'extrémité de cet arbre 7f, cet ensemble permettant de faire varier la position du plot 17 dans la fente 16. Ainsi, les oscillations de l'arbre 7f commandées par la came 6 sont transmises au bras 26 et, par l'intermédiaire de ce bras et du galet 24, au plot 17, de sorte que le socle 11 et la table 8 qui forment ensemble le coulisseau 4, se déplacent en translation sur le support 3 selon une course dépendant de l'amplitude des oscillations de l'arbre 7f.

Comme la position du plot 17 à l'intérieur de la fente 16 peut être commandée par le moteur 22, qui est lui-même un moteur programmable, on voit que la longueur de la course du coulisseau 4 est automatiquement ajustable au cours du déroulement d'un programme mémorisé dans un dispositif de commande capable d'agir notamment sur le moteur 22. Ainsi, à partir d'une came 6 ayant une course standard, on peut ajuster à volonté la course d'un outil, tel que l'outil de coupe 29 fixé au porte-outils 10 et agissant sur la barre de matériau M.

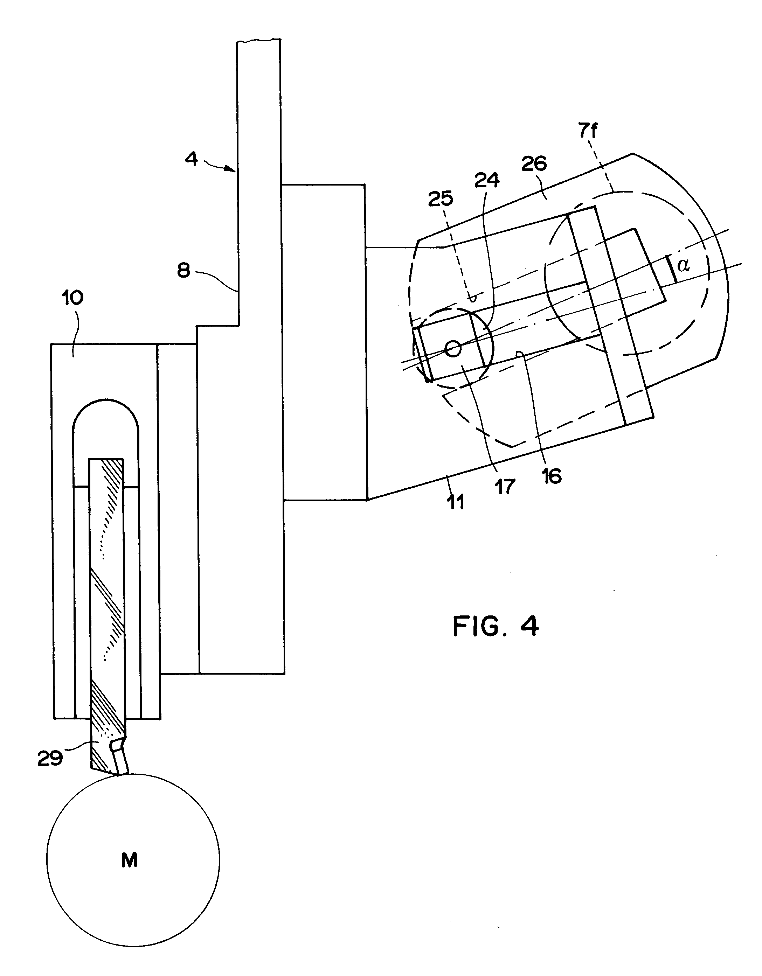

Toutefois, comme le montre encore la fig. 4, le dispositif décrit permet d'effectuer, au moyen du même moteur 22, un autre ajustage, ce qui simplifie encore l'utilisation du tour. En effet, la fig. 4 représente, d'une façon plus schématique, la position de l'outil 29 par rapport à la barre M de matériau à usiner, lorsque l'outil atteint le diamètre d'usinage minimum requis. Dans cette position, la direction de la fente 25 fait avec la direction de la fente 16 un angle désigné par $\alpha$ à la fig. 4. Les dimensions relatives des différents éléments du mécanisme de transmission 7 sont choisies en conséquence. Du fait de cet angle $\alpha$, tout déplacement imposé au plot 17 par le moteur 22 alors que le bras 26 est fixe, a pour effet de modifier légèrement la position du coulisseau 4 et, par conséquent, la position de l'outil 29. L'amplitude de ce déplacement est toutefois extrêmement faible si l'angle $\alpha$ est lui-même petit et les essais ont montré qu'avec un angle de l'ordre de 7°, le résultat voulu était obtenu. Un déplacement d'amplitude relativement grande du plot 17 dans la fente 16 a pour effet une modification sensible de la course totale du coulisseau 4, alors qu'un déplacement de petite amplitude a pour conséquence un ajustage fin de la position finale de l'outil 29 par rapport à l'axe de la broche avec laquelle cet outil coopère.

Au lieu d'un moteur pas à pas, on pourrait aussi prévoir, comme organe de commande du plot 17, un moteur d'un autre type, le cas échéant un moteur ou un vérin hydraulique. De tels organes peuvent facilement être commandés à partir de données mémorisées.

Bien que l'on ait décrit ici un agencement dans lequel la position finale de l'outil et la course du coulisseau sont réglables au moyen du même moteur, le moteur 22 pourrait aussi dans une autre exécution servir uniquement au réglage du rapport de transmission, donc à la longueur de la course, d'autres moyens étant prévus pour le positionnement de l'outil.

**Revendications**

1. Tour comportant au moins une broche, au moins un coulisseau mobile sur un support en direction de ou parallèlement à l'axe de la broche et au moins un mécanisme de transmission actionné par un organe de commande qui détermine la course du coulisseau, caractérisé en ce que le mécanisme de transmission comprend un élément de transmission dont le rapport de transmission est ajustable et est commandé par un moteur programmable.

2. Tour selon la revendication 1, caractérisé en ce que l'élément de transmission à rapport ajustable est un bras radial solidaire par une de ses extrémités d'un arbre qui oscille autour de son axe, la longueur active du dit bras étant variable et commandée par le moteur.

3. Tour selon la revendication 2, caractérisé en ce que la variation de la longueur du bras est obtenue par déplacement d'un galet dans une fente du bras, ce galet étant supporté par un plot coulissant lui-même dans une fente d'un autre élément du mécanisme de transmission.

4. Tour selon la revendication 3, caractérisé en ce que le dit autre élément du mécanisme de transmission est un socle solidaire du coulisseau.

5. Tour selon la revendication 4, caractérisé en ce que le plot est associé à une vis de translation montée dans le socle du coulisseau, en ce que la dite vis est reliée au rotor du moteur et en ce que le stator du moteur est porté par le socle.

6. Tour selon la revendication 5, caractérisé en ce que des moyens sont prévus sur le coulisseau pour effectuer un réglage fin de la position finale d'un outil porté par le coulisseau indépendamment de la position du mécanisme.

**7.** Tour selon la revendication 5, caractérisé en ce que le mécanisme de transmission est agencé de façon que dans la position finale d'un outil porté par le coulisseau l'axe de la vis et l'axe de la fente du bras oscillant font entre eux un angle différent de zéro.

**8.** Tour selon la revendication 7, caractérisé en ce que le dit angle est de l'ordre de 7°.

**9.** Tour selon la revendication 1, caractérisé en ce que le moteur est un moteur pas à pas.

**10** Tour selon la revendication 1, caractérisé en ce que l'organe de commande est une came entraînée en rotation autour de son axe.

FIG. 1

FIG. 2

FIG. 3

FIG. 4

EP 0 506 612 A1

Office européen
des brevets

**RAPPORT DE RECHERCHE EUROPEENNE**

Numero de la demande

EP 92 81 0193

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | FR-A-2 603 826 (MENISSIER) | 1-3 | B23Q35/20 |
| A | * page 9, alinéa 1 - page 10, alinéa 3; revendications 9-10 * | 6 | |
| Y | DE-B-1 043 016 (ACME) * revendication 1 * | 1-3 | |
| A | US-A-2 487 243 (HORVATH) * colonne 3, alinéa 4 * | 1 | |
| A | US-A-2 610 550 (TOUCHMANN) * colonne 22, alinéa 2 - colonne 14, alinéa 2; revendications 4-8,21-25 * | 5 | |

| | | | DOMAINES TECHNIQUES RECHERCHES (Int. Cl.5) |
|---|---|---|---|
| | | | B23Q |

Le présent rapport a été établi pour toutes les revendications

| Lieu de la recherche | Date d'achèvement de la recherche | Examinateur |
|---|---|---|
| LA HAYE | 30 JUIN 1992 | DE GUSSEM J.L. |